# EUROPEAN PATENT SPECIFICATION

(11) **EP 4 020 752 B1**
(45) Date of publication and mention of the grant of the patent: **12.08.2026**
(21) Application number: 21211723.8
(22) Date of filing: 01.12.2021
(51) Int. Cl.: H02J 7/00, G01R 31/3828, H02J 7/40, H02J 7/94, H02J 7/96

(54) **BATTERY CONTROL DEVICE AND MOBILE BATTERY**
BATTERIESTEUERUNGSVORRICHTUNG UND MOBILE BATTERIE
DISPOSITIF DE COMMANDE DE BATTERIE ET BATTERIE MOBILE

(30) Priority: 23.12.2020 JP 2020213746
(43) Date of publication of application: 29.06.2022
(73) Proprietor: Prime Planet Energy & Solutions, Inc., Tokyo 103-0022 (JP)
(72) Inventor: SUGIHARA, Atsushi, Tokyo, 103-0022 (JP); NAKAYAMA, Masato, Tokyo, 103-0022 (JP); NAGANO, Kodai, Tokyo, 103-0022 (JP); MASUOKA, Shizuka, Tokyo, 103-0022 (JP)
(74) Representative: Kuhnen & Wacker Patent- und Rechtsanwaltsbüro PartG mbB

(56) References cited:
- JP-A- 2012 055 086
- US-A1- 2008 091 364
- US-A1- 2016 049 821
- US-A1- 2019 092 184
- US-A1- 2020 094 707

## Description

### BACKGROUND

The present invention relates to a battery control device and a mobile battery.

For example, WO 2014/156041 A1 discloses a battery system which includes a plurality of battery units and which performs charge and discharge with respect to the battery units. In the battery system disclosed herein, charging the plurality of battery units includes an equilibrated charge mode and a normal charge mode. The normal charge mode is executed after the equilibrated charge mode.

In the equilibrated charge mode, for example, when a voltage difference is created among the plurality of battery units, a pre-charge is executed with respect to the plurality of battery units. The pre-charge in the equilibrated charge mode reduces the voltage difference among the plurality of battery units and enables voltage values of the respective battery units to be equalized. In the normal charge mode, a normal charge is performed with respect to the respective battery units, of which voltage values have been equalized in the equilibrated charge mode. Therefore, each battery unit can be fully charged while suppressing a variation in states of charge of the respective battery units.

For example, in a normal charge in the normal charge mode, charge of a predetermined charge capacity is performed in the normal charge by performing a constant current charge for a predetermined amount of time. During discharge with respect to the battery unit, the battery unit is discharged until a state of charge (hereinafter, referred to as a SOC) of the battery unit drops to a predetermined SOC. Subsequently, the SOC of the battery unit may fall below the predetermined SOC due to a self-discharge or the like. When charge (for example, the normal charge in the normal charge mode disclosed in WO 2014/156041 A1) is performed with respect to the battery unit in a state where the SOC of the battery unit is lower than the predetermined SOC, there is a concern that the SOC of the battery unit after the charge ends up being lower than a SOC expected after the charge and an appropriate charge cannot be performed.

From US 2016/049821 A1, an electrical storage system mounted on a vehicle is known which includes: an electrical storage device that is charged or discharged; and a controller that calculates an SOC on the basis of a correspondence relationship between a voltage of the electrical storage device and an SOC of the electrical storage device and that calculates a full charge capacity of the electrical storage device on the basis of an SOC difference between before and after charging and an accumulated charging current value during charging. A Battery Management System (BMS) including a sensing unit and a Micro Control Unit (MCU) is known from US 2008/091364 A1. The sensing unit measures a battery current, a battery voltage, and a battery temperature. The MCU determines a State of Charge (SOC) reset point based on the measured battery current and voltage. The BMS determines a battery overcharge state using a current integration result after the SOC reset point is reached. The MCU includes an SOC calculator and a full charge determining unit. The SOC calculator transmits a present current integration value upon detecting the SOC reset point. The full charge determining unit receives the present current integration value, integrates the current using the measured battery current, and determines that the battery is being overcharged when the current integration value reaches a predetermined battery rating. From US 2020/094707 A1, an estimation device is known that estimates the SOC of an energy storage device and includes a current measurement unit, an estimation unit, and a change unit, in which the estimation unit executes an estimation process for estimating the SOC of the energy storage device by integrating a current measured by the current measurement unit, and a correction process for charging, when a predetermined correction condition is reached, the energy storage device to full charge or the vicinity thereof, and correcting an error in the estimated SOC value, and the change unit changes the correction condition according to a state of the energy storage device. US 2019/092184 A1 finally discloses an electrical charging system for charging an autonomous robot powered by a rechargeable battery.

### SUMMARY

A battery control device proposed herein includes: a discharge controller which controls discharge from a battery; a charge controller which controls charge to the battery; and a storage which stores a charge capacity to be charged to the battery. The discharge controller is configured to be capable of performing at least discharge from the battery to a lower limit SOC determined in advance, the lower limit SOC being a lower limit value of a SOC of the battery when the battery is discharged by a constant current discharge. The charge controller is configured to start a count of the charge capacity at a timing at which the SOC of the battery becomes equal to the lower limit SOC when charge is started in a state where the SOC of the battery is lower than the lower limit SOC, and to end the charge to the battery once the charge capacity having been charged after starting the count becomes equal to the charge capacity stored in the storage.

For example, when charge is started in a state where the SOC of the battery is lower than the lower limit SOC due to a self-discharge or the like, on the supposition that the count of the charge capacity is started at a timing of the start of charge to the battery, there is a concern that the SOC of the battery after charge equivalent to a charge capacity stored in the storage is performed becomes lower than an expected SOC after the charge. However, according to the battery control device proposed herein, since a count of the charge capacity is started at a timing at which the SOC of the battery becomes equal to the lower limit SOC when charge is started in a state where the SOC of the battery is lower than the lower limit SOC, the timing at which the count of the charge capacity is started can be temporally shifted to a later timing. Therefore, by ending the charge once the charge capacity stored in the storage is reached after starting the count of the charge capacity, since the SOC of the battery can be adjusted to the expected SOC after the charge, an appropriate charge can be performed.

In the battery control device proposed herein, the charge controller may be configured to charge the battery at a second charge rate that is lower than a first charge rate determined in advance when the charge is started in a state where the SOC of the battery is lower than a pre-charge SOC determined in advance, which is lower than the lower limit SOC and to charge the battery at the first charge rate when the SOC of the battery is equal to or higher than the pre-charge SOC.

A mobile battery proposed herein includes: a casing; a battery which is arranged inside the casing and which can be charged at a charge rate equal to or higher than 5C; a power transmission unit which is arranged inside the casing; and a battery control device as set forth above, which is connected to the battery and to the power transmission unit.

In the mobile battery proposed herein, the power transmission unit may include a wireless power transmission device.

### BRIEF DESCRIPTION OF THE DRAWINGS

FIG. 1 is a block diagram schematically showing a charging system according to an embodiment;
FIG. 2 is a flow chart showing procedures of control of discharge from a battery by a battery control device;
FIG. 3 is a graph showing a current value and a voltage value during discharge of a battery;
FIG. 4A is a flow chart showing procedures of control of charge to a battery by the battery control device;
FIG. 4B is a flow chart showing procedures of control of charge to a battery by the battery control device;
FIG. 5 is a graph showing a current value and a voltage value during charge of a battery; and
FIG. 6 is a block diagram schematically showing a charging system according to another embodiment.

### DETAILED DESCRIPTION

Hereinafter, an embodiment of the battery control device and the mobile battery disclosed herein will be described with reference to the drawings. It should be noted that the embodiments described herein naturally are not intended to limit the present invention. The present invention is not limited to the embodiments described herein unless specifically mentioned otherwise. It will be recognized that the respective drawings are merely schematic renderings and therefore do not necessarily reflect actual objects. In addition, members and portions that produce same effects will be described using same reference signs and overlapping descriptions will be omitted as deemed appropriate.

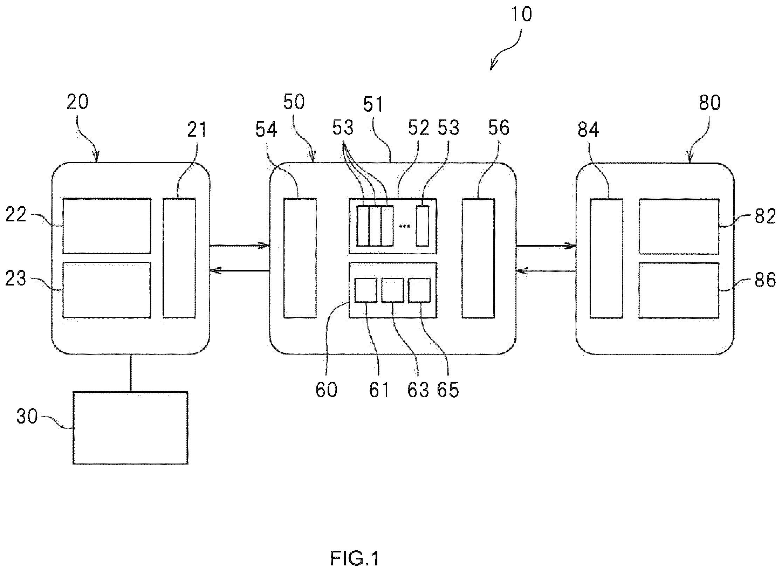

FIG. 1 is a block diagram schematically showing a charging system 10 according to the present embodiment. In the present embodiment, the battery control device and the mobile battery are realized by the charging system 10 shown in FIG. 1. First, a configuration of the charging system 10 will be described. The charging system 10 includes a power feeding device 20, a mobile battery 50, and a portable terminal 80. In the charging system 10, a quick charge is performed from the power feeding device 20 to the mobile battery 50. In addition, for example, the portable terminal 80 is charged using the charged mobile battery 50.

The power feeding device 20, the mobile battery 50, and the portable terminal 80 appropriately include a control device. The control device is an device for controlling various types of processing by each device. The control device can be embodied by a computer that is driven by a program determined in advance. Specifically, each function of the control device is processed by an arithmetic unit (also referred to as a processor, a CPU (Central Processing Unit), or an MPU (Micro-processing unit)) and a storage device (a memory, a hard disk, or the like) of each computer that constitutes the control device. For example, each component of the control device can be embodied as a database that stores data to be embodied by a computer in a format determined in advance, a data structure, a processing module that performs predetermined arithmetic processing in accordance with a program determined in advance, and the like or as a part thereof. The control devices built into the respective devices may be configured to communicate data and function in collaboration with each other.

The power feeding device 20 has a power feeding unit 21, a power supply unit 22, and a power feed control device 23. The power feeding unit 21 is configured to charge the mobile battery 50. For example, the power feeding unit 21 is capable of transmitting (in other words, capable of supplying) power to the mobile battery 50 and, favorably, capable of supplying power at high output. For example, the power feeding unit 21 is a wireless or, in other words, a contactless power feeding device. Alternatively, the power feeding unit 21 may be a contact-type power feeding device.

The power supply unit 22 is connected to an external power supply 30. The power supply unit 22 is a device which receives power from the external power supply 30 and which supplies power to external devices such as the mobile battery 50 and the portable terminal 80 via the power feeding unit 21. The external power supply 30 may be a 100-V or 200-V AC power supply. The power supply unit 22 may include an AC/DC converter.

The power feed control device 23 is electrically connected to the power feeding unit 21 and the power supply unit 22. The power feed control device 23 controls power that is supplied from the power feeding unit 21 to the mobile battery 50. In addition, the power feed control device 23 controls power that is received by the power supply unit 22 from the external power supply 30.

The mobile battery 50 includes a casing 51, a battery 52, a power reception unit 54, a power transmission unit 56, and a battery control device 60. The casing 51 has a predetermined internal space. The battery 52, the power reception unit 54, the power transmission unit 56, and the battery control device 60 are arranged inside the casing 51.

The battery 52 is designed to be capable of a quick charge and is constituted by a high-output battery. For example, battery technology that is applied to a power supply for driving a so-called hybrid vehicle is favorably transferred to the battery 52. The battery 52 is capable of performing charge at a charge rate of 5C or higher (for example, 8C or higher or 10C or higher). The battery 52 is favorably designed to minimize deterioration even when performing charge at a current value corresponding to a charge rate of 5C or higher.

In the present specification, a magnitude of a current that causes a theoretical capacity of the battery 52 to be fully charged or discharged in one hour is defined as 1C. For example, when the capacity of the battery 52 is 2 Ah, 1C equates to 2 A. 3C corresponds to a current value that is three times 1C and, in the example described above, signifies a current value at which the theoretical capacity is fully charged or discharged in 20 minutes. For example, when the charge rate of the battery 52 is 5C, charge of around 15% of the theoretical capacity can be realized by charge of around three minutes. Charge of around 25% of the theoretical capacity of the battery 52 can be realized by charge of around five minutes. In the future, as battery technology that is applied to a power supply for driving a hybrid vehicle is further applied, charge in an even shorter amount of time can be realized by an even higher charge current value. Therefore, it is expected that the battery 52 can be charged with required power merely within several to several ten seconds.

Although not illustrated, the mobile battery 50 according to the present embodiment may include a so-called high-capacity battery in addition to the high-output battery 52. For example, the high-capacity battery allows charge and discharge to be performed at a charge rate of around 1C to 3C. For example, the high-capacity battery has an energy density of around 400 Wh/L to 800 Wh/L.

In the present embodiment, the battery 52 has a battery cell 53. While the battery 52 may only have one battery cell 53, in the present embodiment, the battery 52 has a plurality of battery cells 53. The number of the battery cells 53 is not particularly limited. When there are a plurality of battery cells 53, the plurality of battery cells 53 may be either connected in series or connected in parallel.

Power is supplied to the power reception unit 54 from the power feeding unit 21 of the power feeding device 20. The power reception unit 54 is favorably capable of receiving high output. In this case, the power reception unit 54 includes a wireless power reception device. For example, power is supplied to the wireless power reception device from the power feeding unit 21 of the power feeding device 20 by a contactless power feeding (wireless power feeding) system. As the contactless power feeding system, an electromagnetic induction system, a magnetic field resonance system, an electric field coupling system, a radio wave reception system, or the like can be adopted. Alternatively, the power reception unit 54 may be a contact-type power receiving device.

The power transmission unit 56 is configured to charge the portable terminal 80 and is capable of transmitting power. The power transmission unit 56 includes a wireless power transmission device. For example, the wireless power transmission device supplies power to a terminal power reception unit 84 (to be described later) of the portable terminal 80 by a contactless power feeding (wireless power feeding) system. Alternatively, the power transmission unit 56 may be a contact-type power transmission device. In the present embodiment, a current value of a power feed from the power transmission unit 56 to the portable terminal 80 may be controlled so that, for example, power is fed at a current value kept low enough so as minimize deterioration of a built-in battery 82 (to be described later) of the portable terminal 80.

According to the mobile battery 50 described above, required power can be obtained in a short period of time by a quick charge from the power feeding device 20. Therefore, a user need not wait for a long time to be charged at a location where the power feeding device 20 is installed. In addition, power may be slowly fed from the mobile battery 50 to the portable terminal 80 at a current value determined so as to prevent the built-in battery 82 of the portable terminal 80 from deteriorating. For example, charge may be performed from the mobile battery 50 to the portable terminal 80 after charge has been performed from the power feeding device 20 to the mobile battery 50.

The battery control device 60 controls charge and discharge of the battery 52. Although not illustrated, the battery control device 60 includes a charge/discharge control circuit which controls charge and discharge of the battery 52 and a battery protection circuit which protects the battery 52 from being overcharged or over-discharged. The battery control device 60 is electrically connected to the battery 52, the power reception unit 54, and the power transmission unit 56. The battery control device 60 includes a storage 61, a discharge controller 63, and a charge controller 65. Details of the storage 61, the discharge controller 63, and the charge controller 65 will be provided later.

Examples of the portable terminal 80 include a smartphone, a mobile phone, a tablet terminal, and a mobile PC. The portable terminal 80 includes the built-in battery 82, the terminal power reception unit 84, and a terminal control device 86.

The built-in battery 82 is a battery to act as a power supply for supplying power to the portable terminal 80. The built-in battery 82 favorably has a required charge capacity that is needed to enable the portable terminal 80 to be continuously used for a certain amount of time.

The terminal power reception unit 84 is electrically connected to the mobile battery 50. The terminal power reception unit 84 includes a wireless power reception device such as that described above. Alternatively, the terminal power reception unit 84 may be a contact-type power receiving device. In this case, power is supplied from the power transmission unit 56 of the mobile battery 50 to the terminal power reception unit 84 to charge the built-in battery 82.

The terminal control device 86 is electrically connected to the built-in battery 82 and the terminal power reception unit 84. The terminal control device 86 controls power supplied through the terminal power reception unit 84 and, at the same time, controls charge to the built-in battery 82. In this case, for example, the terminal control device 86 has a charge control circuit which controls charge to the built-in battery 82 and a battery protection circuit which protects the built-in battery 82 from being overcharged.

Next, control of charge and discharge of the battery 52 by the battery control device 60 in the mobile battery 50 will be described. Hereinafter, charge and discharge of the battery 52 signify charge and discharge of the plurality of battery cells 53.

In the present embodiment, charge and discharge of the battery 52 are controlled based on a state of charge (hereinafter, referred to as a SOC) of the battery 52. In the following description, the SOC of the battery 52 at the present moment will be referred to as a present SOC.

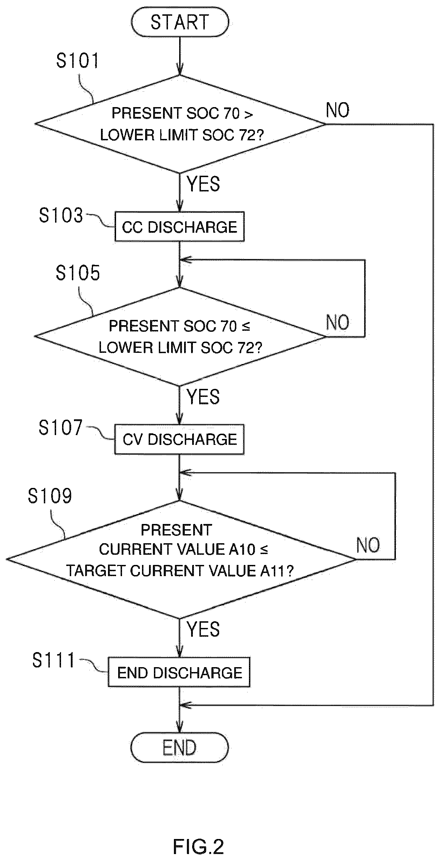

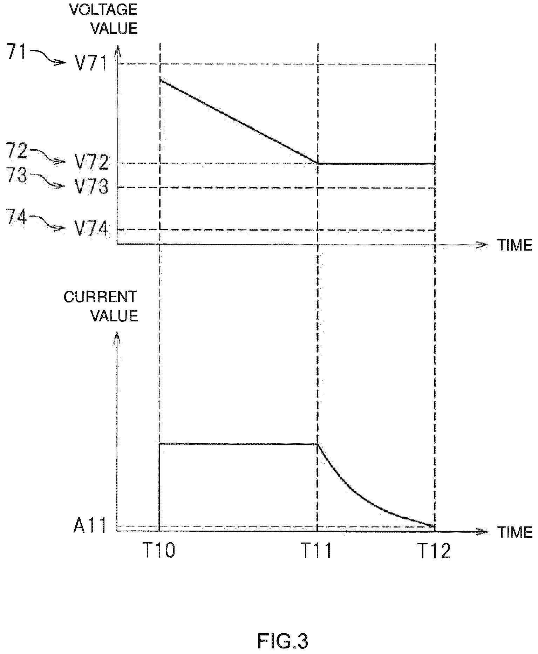

FIG. 2 is a flow chart showing procedures of control of discharge from the battery 52 by the battery control device 60. FIG. 3 is a graph showing a current value and a voltage value during discharge of the battery 52. Next, control of discharge from the battery 52 by the battery control device 60 will be described with reference to the flow chart shown in FIG. 2. In the present embodiment, as shown in FIG. 1, discharge of the battery 52 is performed when, for example, the power transmission unit 56 of the mobile battery 50 and the terminal power reception unit 84 of the portable terminal 80 are electrically connected to each other and, at the same time, charge is performed from the mobile battery 50 to the portable terminal 80. Discharge from the battery 52 is realized by the discharge controller 63 of the battery control device 60 shown in FIG. 1. The discharge controller 63 controls discharge from the battery 52.

In the present embodiment, as shown in FIG. 3, an upper limit SOC 71 determined in advance and a lower limit SOC 72 which is determined in advance and which is lower than the upper limit SOC 71 are set to the battery 52. The upper limit SOC 71 and the lower limit SOC 72 are stored in the storage 61 shown in FIG. 1. Specific numerical values of the upper limit SOC 71 and the lower limit SOC 72 are not particularly limited. For example, the upper limit SOC 71 ranges from SOC 80% to SOC 95%, favorably ranges from SOC 80% to SOC 90%, and particularly favorably ranges from SOC 80% to SOC 85%. For example, the lower limit SOC 72 ranges from SOC 0% to SOC 15%, favorably ranges from SOC 5% to SOC 15%, and particularly favorably ranges from SOC 10% to SOC 15%.

In this case, a voltage value of the battery 52 corresponding to the upper limit SOC 71 is referred to as an upper limit voltage value V71 and a voltage value of the battery 52 corresponding to the lower limit SOC 72 is referred to as a lower limit voltage value V72. In the following description, a SOC can be replaced with a voltage value. For example, the present SOC 70 (refer to FIG. 2), the upper limit SOC 71, and the lower limit SOC 72 can be respectively replaced with a present voltage value of the battery 52 (hereinafter, referred to as a voltage value of the battery 52), the upper limit voltage value V71, and the lower limit voltage value V72.

The discharge controller 63 shown in FIG. 1 controls discharge from the battery 52 until the present SOC 70 (refer to FIG. 2) at least becomes equal to the lower limit SOC 72. In other words, the discharge controller 63 controls discharge from the battery 52 until the voltage value of the battery 52 at least becomes equal to the lower limit voltage value V72. In the present embodiment, the lower limit SOC 72 is a lower limit value of the present SOC 70 when the battery 52 is discharged by a constant current (hereinafter, referred to as CC) discharge.

In this case, first, in step S101 shown in FIG. 2, the discharge controller 63 shown in FIG. 1 determines whether or not the present SOC 70 of the battery 52 is higher than the lower limit SOC 72. When it is determined at this point that the present SOC 70 is equal to or lower than the lower limit SOC 72, discharge from the battery 52 is not performed and the flow chart shown in FIG. 2 is ended.

On the other hand, when it is determined in step S101 that the present SOC 70 of the battery 52 is higher than the lower limit SOC 72, an advance is made to step S103. In step S103, the discharge controller 63 performs control of a CC discharge. For example, in FIG. 3, the CC discharge is started at a time T10.

Next, in step S105 shown in FIG. 2, during the CC discharge, the discharge controller 63 determines whether or not the present SOC 70 is equal to or lower than the lower limit SOC 72. At this point, when it is determined that the present SOC 70 is still higher than the lower limit SOC 72, processing of step S105 is executed once again.

On the other hand, when it is determined in step S105 that the present SOC 70 is equal to or lower than the lower limit SOC 72, an advance is made to step S107. In FIG. 3, the present SOC 70 of the battery 52 becomes equal to or lower than the lower limit SOC 72 at a time T11. In step S107 shown in FIG. 2, the discharge controller 63 performs control of a constant voltage (hereinafter, referred to as CV) discharge from the battery 52.

Next, in step S109, during the CV discharge, the discharge controller 63 determines whether or not the current value of the battery 52 at the present moment (hereinafter, referred to as a present current value) A10 is equal to or lower than a target current value A11. The target current value A11 is stored in advance in the storage 61 shown in FIG. 1 and is appropriately set. At this point, when it is determined that the present current value A10 is still higher than the target current value A11, processing of step S109 is executed once again. On the other hand, when it is determined in step S109 that the present current value A10 is equal to or lower than the target current value A11, an advance is made to step S111 and the control of the discharge from the battery 52 ends. In FIG. 3, the present current value A10 becomes equal to or lower than the target current value A11 at a time T12 and the discharge from the battery 52 is ended.

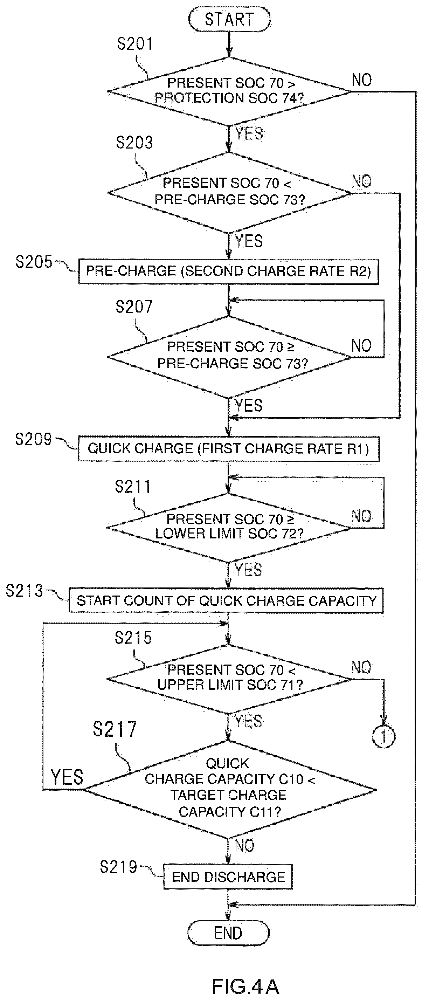

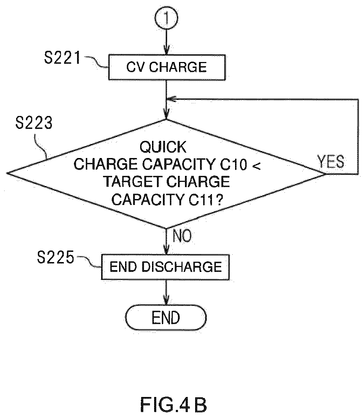

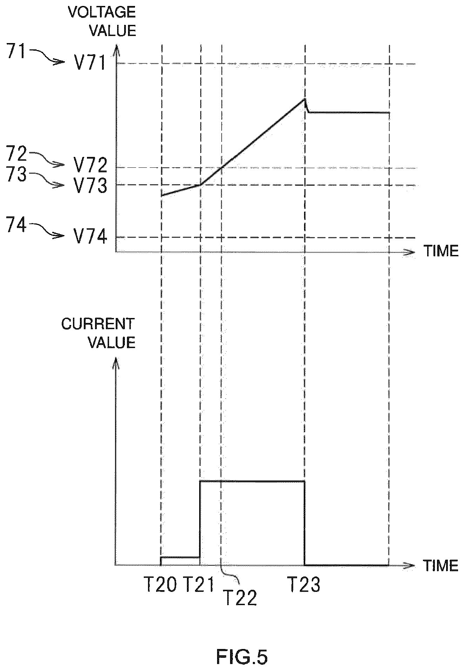

FIGS. 4A and 4B are flow charts showing procedures of control of charge to the battery 52 by the battery control device 60. FIG. 5 is a graph showing a current value and a voltage value during charge of the battery 52. Next, control of charge to the battery 52 will be described with reference to the flow charts shown in FIGS. 4A and 4B. In the present embodiment, as shown in FIG. 1, charge of the battery 52 is performed when the power feeding unit 21 of the power feeding device 20 and the power reception unit 54 of the mobile battery 50 are electrically connected to each other and, at the same time, charge is performed from the power feeding device 20 to the mobile battery 50. In the present embodiment, control of charge to the battery 52 is realized by the charge controller 65. The charge controller 65 controls charge to the battery 52.

In the present embodiment, the charge controller 65 performs a pre-charge and a quick charge with respect to the battery 52. In this case, as shown in FIG. 5, a pre-charge SOC 73 determined in advance is set to the battery 52. A voltage value of the battery 52 that corresponds to the pre-charge SOC 73 is referred to as a pre-charge voltage value V73. In the following description, when a SOC is replaced with a voltage value, the pre-charge SOC 73 can be replaced with the pre-charge voltage value V73. The pre-charge SOC 73 is lower than the lower limit SOC 72 and is stored in the storage 61 shown in FIG. 1 in advance. For example, the pre-charge SOC 73 ranges from SOC 0% to SOC 15%, favorably ranges from SOC 0% to SOC 10%, and particularly favorably ranges from SOC 0% to SOC 5%.

The charge controller 65 performs the pre-charge until the present SOC 70 becomes equal to the pre-charge SOC 73 determined in advance and subsequently performs a quick charge.

In this case, first, in step S201 shown in FIG. 4A, the charge controller 65 determines whether or not the present SOC 70 of the battery 52 is higher than a protection SOC 74. The protection SOC 74 as used herein refers to an upper limit value of the present SOC 70 when the battery 52 is being over-discharged. In other words, when the present SOC 70 is equal to or lower than the protection SOC 74, the battery 52 enters an over-discharged state. The protection SOC 74 is a value determined in advance and is stored in the storage 61 shown in FIG. 1 in advance. As shown in FIG. 5, the protection SOC 74 is lower than the pre-charge SOC 73. A voltage value of the battery 52 that corresponds to the protection SOC 74 is referred to as a protection voltage value V74. Hereinafter, when a SOC is replaced with a voltage value, the protection SOC 74 can be replaced with the protection voltage value V74.

In the present embodiment, in step S201 shown in FIG. 4A, when it is determined that the present SOC 70 of the battery 52 is equal to or lower than the protection SOC 74, charge to the battery 52 is favorably not performed. Therefore, when the present SOC 70 is equal to or lower than the protection SOC 74, charge to the battery 52 is not performed and the flow charts of FIGS. 4A and 4B are ended.

On the other hand, when it is determined in step S201 that the present SOC 70 is higher than the protection SOC 74, an advance is made to step S203 shown in FIG. 4A. In step S203, the charge controller 65 determines whether or not the present SOC 70 of the battery 52 is lower than the pre-charge SOC 73. At this point, when it is determined that the present SOC 70 is equal to or higher than the pre-charge SOC 73, a determination of NO is made in step S203. In this case, the control of a pre-charge to the battery 52 is not performed and an advance is made to the quick charge in step S209 shown in FIG. 4A.

On the other hand, when it is determined in step S203 that the present SOC 70 of the battery 52 is lower than the pre-charge SOC 73, an advance is made to step S205 shown in FIG. 4A. In step S205, in order to perform a pre-charge to the battery 52, the charge controller 65 performs control so as to perform charge (in this case, a CC charge) at a second charge rate R2. In FIG. 5, at a time T20, since the present SOC 70 of the battery 52 is lower than the pre-charge SOC 73, a pre-charge to the battery 52 is started.

Next, in step S207, during the pre-charge, the charge controller 65 determines whether or not the present SOC 70 is equal to or higher than the pre-charge SOC 73. At this point, when it is determined that the present SOC 70 is lower than the pre-charge SOC 73, processing of step S207 is executed once again and the pre-charge is continued.

On the other hand, when it is determined in step S207 that the present SOC 70 is equal to or higher than the pre-charge SOC 73, an advance is made to step S209 in order to end the pre-charge. In step S209, in order to perform a quick charge to the battery 52, the charge controller 65 performs control so as to perform charge at a first charge rate R1 that is higher than the second charge rate R2 in the pre-charge. The quick charge in this case is a CC charge. In FIG. 5, at a time T21, since the present SOC 70 of the battery 52 becomes equal to or higher than the pre-charge SOC 73, a quick charge is started.

In this case, for example, the first charge rate R1 in the quick charge ranges from 5C to 20C, favorably ranges from 10C to 20 C, and particularly favorably ranges from 15C to 20C. For example, the second charge rate R2 in the pre-charge ranges from 0.05C to 0.5C, favorably ranges from 0.1C to 0.5C, and particularly favorably ranges from 0.3C to 0.5C.

Next, in step S211 shown in FIG. 4A, the charge controller 65 determines whether or not the present SOC 70 of the battery 52 is equal to or higher than the lower limit SOC 72. At this point, when it is determined that the present SOC 70 is lower than the lower limit SOC 72, processing of step S211 is executed once again.

On the other hand, when it is determined in step S211 that the present SOC 70 is equal to or higher than the lower limit SOC 72, an advance is made to step S213. In step S213, the charge controller 65 starts a count of the charge capacity according to a quick charge. In other words, when charge is started in a state where the present SOC 70 of the battery 52 is lower than the lower limit SOC 72, the charge controller 65 starts a count of the charge capacity at a timing at which the present SOC 70 of the battery 52 becomes equal to the lower limit SOC 72. In the present embodiment, the charge capacity of which a count is started in step S215 is referred to as a quick charge capacity C10. In FIG. 5, at a time T22, the present SOC 70 of the battery 52 becomes equal to or higher than the lower limit SOC 72 and a count of the quick charge capacity C10 is started.

After the count of the quick charge capacity C10 is started in step S213, subsequently in step S215, the charge controller 65 determines whether or not the present SOC 70 of the battery 52 is lower than the upper limit SOC 71 during the quick charge. When the present SOC 70 is equal to or higher than the upper limit SOC 71, the battery 52 can be described as being in an overcharged state. At this point, when it is determined that the present SOC 70 is lower than the upper limit SOC 71, an advance is made to step S217.

In step S217, the charge controller 65 determines whether or not the quick charge capacity C10 of the battery 52 is smaller than a target charge capacity C11. In the present embodiment, the target charge capacity C11 is a charge capacity to be charged to the battery 52 in a quick charge and is a charge capacity to be a target in the quick charge. In this case, for example, a SOC when the battery 52 is fully charged will be referred to as a fully charged SOC. The target charge capacity C11 is a charge capacity to be charged to the battery 52 when the present SOC 70 of the battery 52 changes from the lower limit SOC 72 to the fully charged SOC. For example, a charge capacity of the target charge capacity C11 can be obtained by performing a CC charge for an elapsed time determined in advance. In this case, the target charge capacity C11 is stored in the storage 61 in advance.

When it is determined in step S217 that the quick charge capacity C10 of the battery 52 is smaller than the target charge capacity C11, a return is made to step S215 to continue the quick charge.

On the other hand, when the quick charge capacity C10 of the battery 52 is equal to or larger than the target charge capacity C11 in step S217, an advance is made to step S219, the quick charge ends, and the control of the charge to the battery 52 by the charge controller 65 is ended. In FIG. 5, at a time T23, the quick charge capacity C10 becomes equal to or larger than the target charge capacity C11 and the charge to the battery 52 ends.

When it is determined in step S215 in FIG. 4A described above that the present SOC 70 of the battery 52 is equal to or higher than the upper limit SOC 71, since the battery 52 is in an overcharged state, an advance is made to step S221 in FIG. 4B. In step S221, the charge controller 65 switches from a CC charge to a CV charge in the quick charge to the battery 52.

Subsequently, in step S223 in FIG. 4B, the charge controller 65 determines whether or not the quick charge capacity C10 of the battery 52 is smaller than the target charge capacity C11 stored in the storage 61 in a similar manner to step S217 in FIG. 4A. When it is determined in step S223 that the quick charge capacity C10 of the battery 52 is smaller than the target charge capacity C11, step S223 is executed once again to continue the CV charge.

On the other hand, when it is determined in step S223 that the quick charge capacity C10 of the battery 52 is equal to or larger than the target charge capacity C11, an advance is made to step S225, the quick charge (CV charge) ends, and the control of the charge to the battery 52 by the charge controller 65 is ended.

As described above, in the present embodiment, as shown in FIG. 1, the mobile battery 50 includes the casing 51, the battery 52, the power transmission unit 56, and the battery control device 60. The battery 52 is arranged inside the casing 51 and can be charged at a charge rate of 5C or higher. The power transmission unit 56 is arranged inside the casing 51. The battery control device 60 is connected to the battery 52 and the power transmission unit 56. The battery control device 60 includes: the storage 61; a discharge controller 63 which controls discharge from the battery 52; and a charge controller 65 which controls charge to the battery 52. The storage 61 stores the target charge capacity C11 (refer to FIG. 4A) to be charged to the battery 52. In this case, the target charge capacity C11 refers to a charge capacity to be charged in a quick charge. As shown in FIG. 3, the discharge controller 63 is configured to be capable of performing at least discharge from the battery 52 to the lower limit SOC 72 determined in advance. When charge is started in a state where the present SOC 70 of the battery 52 is lower than the lower limit SOC 72, the charge controller 65 is configured to start a count of the quick charge capacity C10 at a timing at which the present SOC 70 of the battery 52 becomes equal to the lower limit SOC 72 (refer to step S213 in FIG. 4A). In addition, when a charge capacity having been charged after the count is started (in this case, the quick charge capacity C10) becomes equal to the target charge capacity C11 stored in the storage 61, the charge controller 65 is configured to end the charge to the battery 52.

For example, the SOC of the battery 52 can fall below the lower limit SOC 72 due to a self-discharge or the like. In this case, supposing that the count of the quick charge capacity C10 is started during a quick charge to the battery 52 at a timing of the start of the quick charge, there is a risk that the present SOC 70 of the battery 52 after the charge when the quick charge capacity C10 becomes equal to the target charge capacity C11 becomes lower than the fully charged SOC described above. This is because the target charge capacity C11 is set to a charge capacity to be charged to the battery 52 when the present SOC 70 changes from the lower limit SOC 72 to the fully charged SOC. While the target charge capacity C11 is invariant in the present embodiment, for example, the target charge capacity C11 may conceivably be made variable in consideration of a charge capacity that is self-discharged. However, since the charge capacity that is self-discharged varies, accurately measuring the self-discharged charge capacity and setting the target charge capacity C11 every time charge is performed complicates control. Therefore, the target charge capacity C11 is favorably invariant or, in other words, constant.

In consideration thereof, in the present embodiment, since a count of the quick charge capacity C10 is started at a timing at which the present SOC 70 of the battery 52 becomes equal to the lower limit SOC 72 during charge in a state where the present SOC 70 of the battery 52 is lower than the lower limit SOC 72, the timing at which the count of the quick charge capacity C10 can be temporally shifted to a later timing. Therefore, by ending the charge once the target charge capacity C11 stored in the storage 61 is reached after starting the count of the quick charge capacity C10, since the SOC of the battery 52 can be adjusted to the expected SOC after the charge (in other words, the fully charged SOC), an appropriate charge can be performed.

In the present embodiment, even in a case where the battery 52 self-discharges, since an appropriate charge can be performed without changing a value of the target charge capacity C11, complication of control can be suppressed.

In the present embodiment, the charge controller 65 is configured to perform charge (in this case, a pre-charge) of the battery 52 (refer to step S205 in FIG. 4A) at the second charge rate R2 that is lower than the first charge rate R1 determined in advance when the charge is started in a state where the present SOC 70 of the battery 52 is lower than the pre-charge SOC 73 determined in advance which is lower than the lower limit SOC 72 as in step S203 in FIG. 4A. In addition, the charge controller 65 is configured to perform charge (in this case, a quick charge) of the battery 52 at the first charge rate R1 as in step S209 when the present SOC 70 of the battery 52 is equal to or higher than the pre-charge SOC 73 as in step S207 in FIG. 4A.

Supposing that the pre-charge SOC 73 and the lower limit SOC 72 are set at a same value, a longer charge time for a pre-charge results in a longer total charge time of the battery 52. In this case, a total charge time refers to a time that is a sum of a charge time required by a pre-charge and a charge time required by a quick charge. However, in the present embodiment, as shown in FIG. 5, the pre-charge SOC 73 is set lower than the lower limit SOC 72 during discharge. Therefore, charge to the battery 52 by a pre-charge ends when the present SOC 70 is lower than the lower limit SOC 72. Accordingly, since the charge time required by a pre-charge can be shortened, the total charge time of the battery 52 can be reduced.

It should be noted that, in the present embodiment, a pre-charge is performed in order to reduce a voltage difference among the plurality of battery cells 53 (refer to FIG. 1) included in the battery 52 and to equalize the voltage difference among the plurality of battery cells 53. Therefore, since a quick charge is performed with respect to the plurality of battery cells 53 of which voltage values have been equalized, the battery 52 can be set to a fully charged state while suppressing a variation in states of charge of the battery cells 53. In the present embodiment, as described above, setting the pre-charge SOC 73 lower than the lower limit SOC 72 as shown in FIG. 5 enables the charge time required by a pre-charge to be shortened. Even when the charge time required by a pre-charge is shortened, the voltage values of the plurality of battery cells 53 can be equalized by the pre-charge. Therefore, even in the present embodiment, the battery 52 can be charged in a stable manner.

In the present embodiment, the power transmission unit 56 shown in FIG. 1 includes a wireless power transmission device. This enables, for example, power to be supplied from the power transmission unit 56 to the portable terminal 80 and charge to the portable terminal 80 (more specifically, the built-in battery 82) to be performed while the mobile battery 50 is being carried around. In addition, for example, the portable terminal 80 can be readily charged by arranging the mobile battery 50 within a predetermined range from the portable terminal 80 without regard to a state of connection between the mobile battery 50 and the portable terminal 80.

In the present embodiment, the battery 52 and the battery control device 60 are included in the mobile battery 50 and are realized by the mobile battery 50. However, the realization of the battery control device 60 is not limited to the realization by the mobile battery 50.

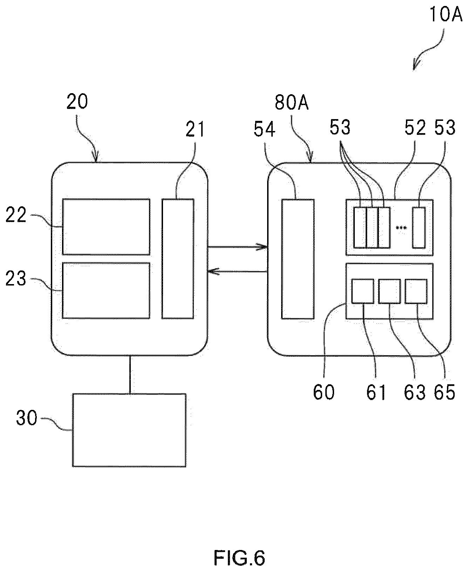

FIG. 6 is a conceptual diagram of a charging system 10A according to another embodiment. As shown in FIG. 6, the charging system 10A includes a power feeding device 20 and a portable terminal 80A. In the charging system 10A, a mobile battery 50 such as that shown in FIG. 1 is omitted. The portable terminal 80A includes a high-output battery 52, a power reception unit 54, and a battery control device 60. The battery 52, the power reception unit 54, and the battery control device 60 of the portable terminal 80A are respectively the same as the battery 52, the power reception unit 54, and the battery control device 60 of the mobile battery 50 shown in FIG. 1. In this manner, even in a case where the high-output battery 52, the power reception unit 54, and the battery control device 60 are included in the portable terminal 80A, a similar effect to the embodiment described above is produced.

## Claims

1. A battery control device (60), comprising:
a discharge controller (63) which controls discharge from a battery (52);
a charge controller (65) which controls charge to the battery (52); and
a storage (61) which stores a charge capacity (C11) to be charged to the battery (52),
**characterized in that**
the discharge controller (63) is configured to be capable of performing at least discharge from the battery (52) to a lower limit SOC (72) determined in advance, the lower limit SOC (72) being a lower limit value of a SOC (70) of the battery (52) when the battery (52) is discharged by a constant current discharge, and
the charge controller (65) is configured to start a count of the charge capacity (C10) at a timing at which the SOC (70) of the battery (52) becomes equal to the lower limit SOC (72) when charge is started in a state where the SOC (70) of the battery (52) is lower than the lower limit SOC (72), and to end the charge to the battery (52) once the charge capacity (C10) having been charged after starting the count becomes equal to the charge capacity (C11) stored in the storage (61).

2. The battery control device (60) according to claim 1, wherein
the charge controller (65) is configured
to charge the battery (52) at a second charge rate (R2) that is lower than a first charge rate (R1) determined in advance when the charge is started in a state where the SOC (70) of the battery (52) is lower than a pre-charge SOC (73) determined in advance, which is lower than the lower limit SOC (72), and
to charge the battery (52) at the first charge rate (R1) when the SOC (70) of the battery (52) is equal to or higher than the pre-charge SOC (73).

3. A mobile battery (50), comprising:
a casing (51);
a battery (52) which is arranged inside the casing (51) and which can be charged at a charge rate equal to or higher than 5C;
a power transmission unit (56) which is arranged inside the casing (51); and
a battery control device (60) according to claim 1, which is connected to the battery (52) and to the power transmission unit (56).

4. The mobile battery (50) according to claim 3, wherein the power transmission unit (56) includes a wireless power transmission device.

## Patentansprüche

1. Batteriesteuerungsvorrichtung (60), aufweisend:
einen Entladungs-Controller (63), die eine Entladung von einer Batterie (52) steuert;
einen Lade-Controller (65), die eine Aufladung der Batterie (52) steuert; und
einen Speicher (61), der eine Ladekapazität (C11) speichert, mit der die Batterie (52) geladen werden soll,
**dadurch gekennzeichnet, dass**
der Entladungs-Controller (63) so konfiguriert ist, dass er zumindest eine Entladung von der Batterie (52) bis zu einer im Voraus festgelegten SOC-Untergrenze (72) durchführen kann, wobei die SOC-Untergrenze (72) ein unterer Grenzwert des SOC (70) der Batterie (52) ist, wenn die Batterie (52) durch eine konstante Stromentladung entladen wird, und
der Lade-Controller (65) so konfiguriert ist, dass er eine Zählung der Ladekapazität (C10) zu einem Zeitpunkt startet, zu dem der SOC (70) der Batterie (52) der SOC-Untergrenze (72) entspricht, wenn ein Ladevorgang in einem Zustand gestartet wird, in dem der SOC (70) der Batterie (52) die SOC-Untergrenze (72) unterschritten hat, und den Ladevorgang der Batterie (52) beendet, sobald die nach dem Starten der Zählung geladene Ladekapazität (C10) der in dem Speicher (61) gespeicherten Ladekapazität (C11) entspricht.

2. Batteriesteuerungsvorrichtung (60) nach Anspruch 1, wobei
der Lade-Controller (65) so konfiguriert ist,
dass er die Batterie (52) bei einer zweiten Laderate (R2) lädt, die niedriger ist als eine im Voraus festgelegte erste Laderate (R1), wenn der Ladevorgang in einem Zustand gestartet wird, in dem der SOC (70) der Batterie (52) niedriger ist als ein im Voraus festgelegter Vorlade-SOC (73), der niedriger ist als die SOC-Untergrenze (72), und
die Batterie (52) bei der ersten Laderate (R1) lädt, wenn der SOC (70) der Batterie (52) größer oder gleich dem Vorlade-SOC (73) ist.

3. Mobile Batterie (50), aufweisend:
ein Gehäuse (51);
eine Batterie (52), die im Inneren des Gehäuses (51) angeordnet ist und die bei einer Laderate von größer oder gleich 5C geladen werden kann;
eine Leistungsübertragungseinheit (56), die im Inneren des Gehäuses (51) angeordnet ist;
und
eine Batteriesteuerungsvorrichtung (60) nach Anspruch 1, die mit der Batterie (52) und der Leistungsübertragungseinheit (56) verbunden ist.

4. Mobile Batterie (50) nach Anspruch 3, wobei die Leistungsübertragungseinheit (56) eine drahtlose Leistungsübertragungsvorrichtung umfasst.

## Revendications

1. Un dispositif de commande de batterie (60), comprenant :
un contrôleur de décharge (63) qui commande la décharge d'une batterie (52) ;
un contrôleur de charge (65) qui commande la charge de la batterie (52) ; et
une mémoire (61) qui stocke une capacité de charge (C11) à fournir à la batterie (52),
**caractérisé en ce que**
le contrôleur de décharge (63) est configuré pour pouvoir effectuer au moins une décharge de la batterie (52) jusqu'à un SOC limite inférieure (72) déterminé à l'avance, le SOC limite inférieure (72) étant une valeur limite inférieure d'un SOC (70) de la batterie (52) lorsque la batterie (52) est déchargée par une décharge à courant constant, et
le contrôleur de charge (65) est configuré pour démarrer le comptage de la capacité de charge (C10) au moment où le SOC (70) de la batterie (52) devient égal au SOC limite inférieure (72) lorsque la charge est lancée dans un état où le SOC (70) de la batterie (52) est inférieur au SOC limite inférieure (72), et à mettre fin à la charge de la batterie (52) dès que la capacité de charge (C10) accumulée depuis le début du comptage devient égale à la capacité de charge (C11) stockée dans la mémoire (61).

2. Le dispositif de commande de batterie (60) selon la revendication 1, dans lequel
le contrôleur de charge (65) est configuré
pour charger la batterie (52) à un deuxième taux de charge (R2) inférieur à un premier taux de charge (R1) déterminé à l'avance lorsque la charge est lancée dans un état où le SOC (70) de la batterie (52) est inférieur à un SOC de précharge (73) déterminé à l'avance, lequel est inférieur au SOC limite inférieure (72), et
à charger la batterie (52) au premier taux de charge (R1) lorsque le SOC (70) de la batterie (52) est égal ou supérieur au SOC de précharge (73).

3. Une batterie mobile (50), comprenant :
un boîtier (51) ;
une batterie (52) qui est disposée à l'intérieur du boîtier (51) et qui peut être chargée à un courant de charge égal ou supérieur à 5C ;
une unité de transmission d'énergie (56) disposée à l'intérieur du boîtier (51) ; et
un dispositif de commande de batterie (60) selon la revendication 1, qui est connecté à la batterie (52) et à l'unité de transmission d'énergie (56).

4. La batterie mobile (50) selon la revendication 3, dans laquelle l'unité de transmission d'énergie (56) comprend un dispositif de transmission d'énergie sans fil.
